Europäisches Patentamt

European Patent Office

Office européen des brevets

(11) Publication number: **0 350 550**
**A1**

## EUROPEAN PATENT APPLICATION

(21) Application number: 88306365.3

(51) Int. Cl.⁴: **B60S 1/40**

(22) Date of filing: **12.07.88**

(43) Date of publication of application:
**17.01.90 Bulletin 90/03**

(84) Designated Contracting States:
**AT BE CH DE ES FR GB GR IT LI LU NL SE**

(71) Applicant: **Chen, Liang-An**
**No. 180, Hsin Min Street Dan Shui**
**Taipei(TW)**

(72) Inventor: **Chen, Liang-An**
**No. 180, Hsin Min Street Dan Shui**
**Taipei(TW)**

(74) Representative: **Gordon, Michael Vincent et al**
**GILL JENNINGS & EVERY 53-64 Chancery**
**Lane**
**London WC2A 1HN(GB)**

(54) **Connector for connecting a wiper blade with a wiper arm.**

(57) A connector (100) has a body (10) made of moulded plastics material, the body having a sleeve (12) for receiving one end of the wiper arm, and a gripping slot (11) for receiving a retaining pin of the wiper blade. The sleeve (12) has an elongate compartment (12A) extending in a longitudinal direction, and the gripping slot (11) is formed to extend in the same longitudinal direction so as to facilitate its assembly to and its disassembly from the wiper blade. A metallic retaining piece (20) snaps in the sleeve (12) and is operable to secure the connector (100) to the wiper arm.

FIG. 5

## CONNECTOR FOR CONNECTING A WIPER BLADE WITH A WIPER ARM

This invention relates to a connector for connecting a wiper blade with a wiper arm.

It is known for a connector, for connecting a wiper blade with a wiper arm, to consist of a body integrally moulded of plastics material to present a sleeve and a gripping slot. The sleeve has an elongate compartment, extending from one side of the body in a longitudinal direction for receiving one end of the wiper arm, and also has an integrally moulded tongue for help in retaining the wiper arm. The gripping slot extends, in a direction perpendicular to said longitudinal direction, between an opposed pair of resiliently deformable jaws for receiving a retaining pin of the wiper blade. It has been found, however, that the tongue can break when the wiper arm is inserted or removed, and that it can be difficult to remove the wiper blade from the gripping slot.

A main object of this invention is to provide an improved connector for connecting a wiper blade with a wiper arm.

In accordance with this invention, there is a connector, for connecting a wiper blade with a wiper arm, comprising a body moulded of plastics material having a sleeve and a gripping slot, said sleeve having an elongate compartment extending from one side of said body in a longitudinal direction for receiving one end of said wiper arm, and said gripping slot being resiliently deformable for receiving a retaining pin of said wiper blade; characterised in t.hat said sleeve is provided with a metallic retaining piece which snaps in said elongate compartment and is operable to secure said connector on said end of said wiper arm, and in that said gripping slot is formed in an opposite side of said body to said elongate compartment and extends in the same longitudinal direction as said elongate compartment.

Preferably,
said sleeve has a first opening and a second opening;
said metallic retaining piece has a tongue and a latch, said tongue being disposed to correspond with said first opening and be capable of resiliently deflecting in said first opening, and said latch being disposed to correspond with said second opening and having a free edge for engaging with an adjacent end edge of said second opening to latch said metallic retaining piece in position; and
said tongue has a retaining hole for receiving a stud provided on said end of said wiper arm.

Also preferably, said gripping slot has a pair of jaws converging to a part-cylindrical seat and only one of said jaws is resiliently deformable.

It is expected that the wiper arm will be received, in practice, by an outer part of the connector with respect to a surface to be wiped, such as a windscreen, and that the wiper blade will be received by an inner part of the connector, with the elongate compartment and the gripping slot thus being offset but parallel.

Two connectors, according to this invention, will now be described, by way of example only, and by comparison with a conventional connector, with reference to the accompanying drawings, in which:-

Figure 1 is a perspective view of a conventional connector;

Figure 2 is an underneath perspective view of the connector of Fig 1;

Figure 3 is a fragmentary, exploded view of a conventional windshield wiper assembly employing the connector of Figure 1;

Figure 4 is a longitudinal cross-sectional view of the connector of Figure 1 showing how it is assembled with a wiper arm and a wiper blade;

Figure 5 is a perspective view of a first connector in accordance with this invention;

Figure 6 is an exploded, perspective view of the connector of Figure 5;

Figure 7 is a side view of the connector of Figure 5, partially in longitudinal section;

Figure 8 is an underneath perspective view of a second connector in accordance with this invention;

Figure 9 is an exploded, perspective view of a windshield wiper assembly employing the connector of Figure 5; and

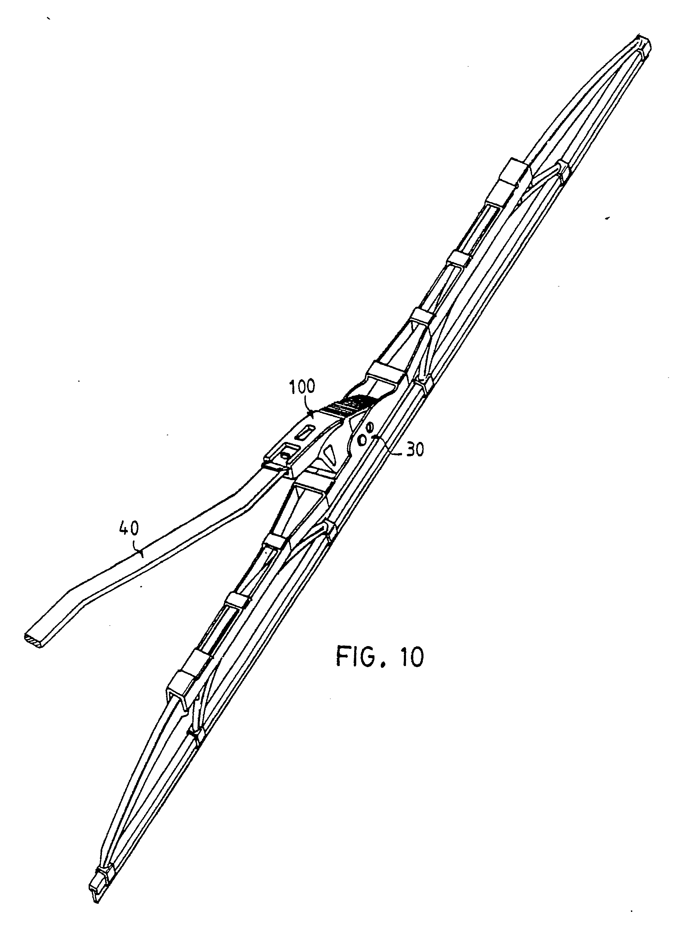

Figure 10 is a perspective view of the windshield wiper assembly of Figure 9 when assembled.

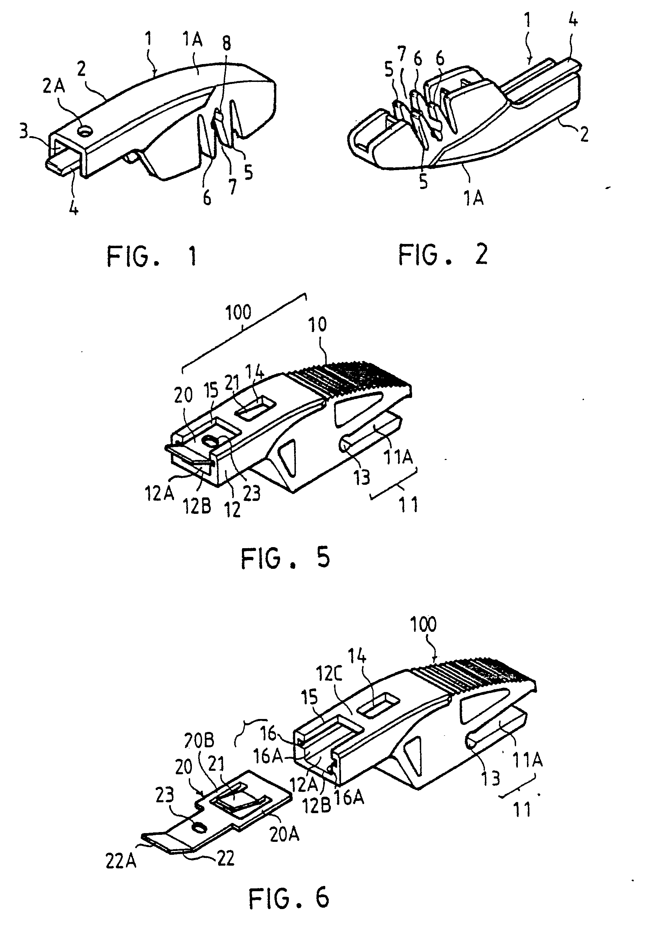

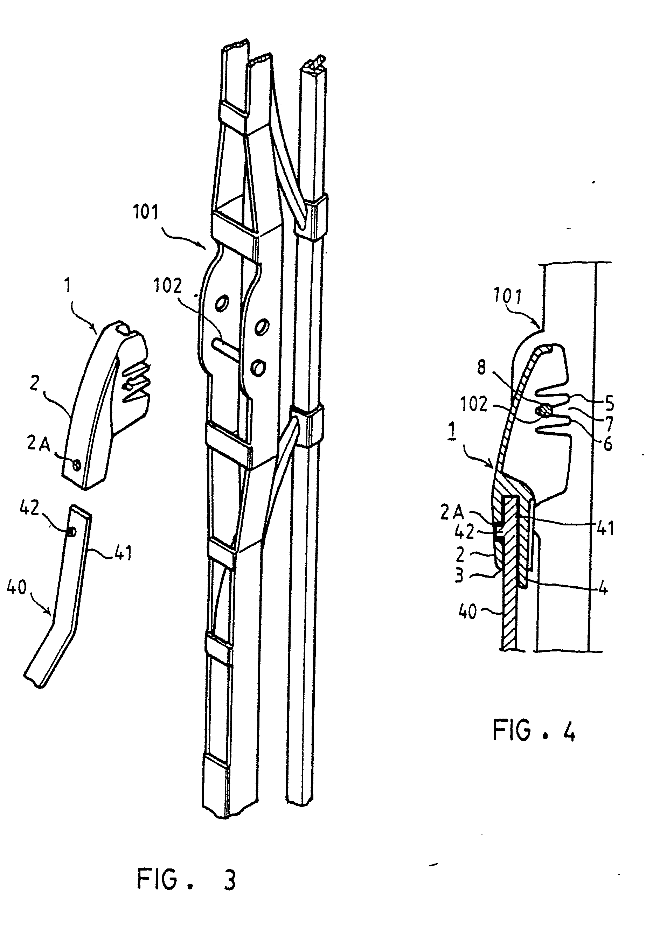

A conventional connector for connecting a wiper blade with a wiper arm is shown in Figures 1 to 4.

The connector, designated by numeral 1, consists of a body 1A which includes a longitudinal holder 2 having a U-shaped cross-section to form an elongate channel 3, a tongue 4 extending from body 1A along channel 3, and two pairs of fingers 5, 5, 6, 6 extending transversely from body 1A. The pairs of fingers 5, 5, 6, 6 form a slot 7 provided with a part-cylindrical seat 8. Body 1A, holder 2, tongue 4, and fingers 5, 5, 6, 6 are moulded of plastics material into an integral unit. A hole 2A is formed in holder 2. In use, one end 41 of a wiper arm 40 having a stud 42 on an upper side (Figures 3 and 4) is inserted into channel 3, with stud 42 engaging with hole 2A of holder 2, while tongue 4 resiliently acts against end 41 of wiper arm 40 from the lower side of wiper arm 40 to keep stud 42 engaged with hole 2A. Connector 1 is mounted on a wiper blade 101 (Figures 3 and 4) by passing fingers 5, 5, 6, 6 over a mounting pin 102 of wiper blade 101 until mounting pin 102 is seated in seat 8 so as to be gripped by fingers 5, 5, 6, 6.

However, in the conventional connector 1, since fingers 5, 5, 6, 6 are formed to extend transversely with respect to body 1A, it is relatively awkward to disassemble connector 1 from wiper blade 101. Furthermore, tongue 4 tends to break easily when end 41 of wiper arm 40 is inserted into channel 3 or removed from channel 3.

As shown in Figures 5 and 6, a connector 100 according to this invention has a body 10, which is moulded of plastics material. It includes a sleeve 12 having an elongate compartment 12A extending from one side of body 10 in a longitudinal direction, and a gripping slot 11 formed in an opposite side of body 10 and extending in parallel with the same longitudinal direction, the gripping slot 11 having a slot 11A converging inwards and a part-cylindrical seat 13 having a generally C-shaped wall at the inner end of slot 11A.

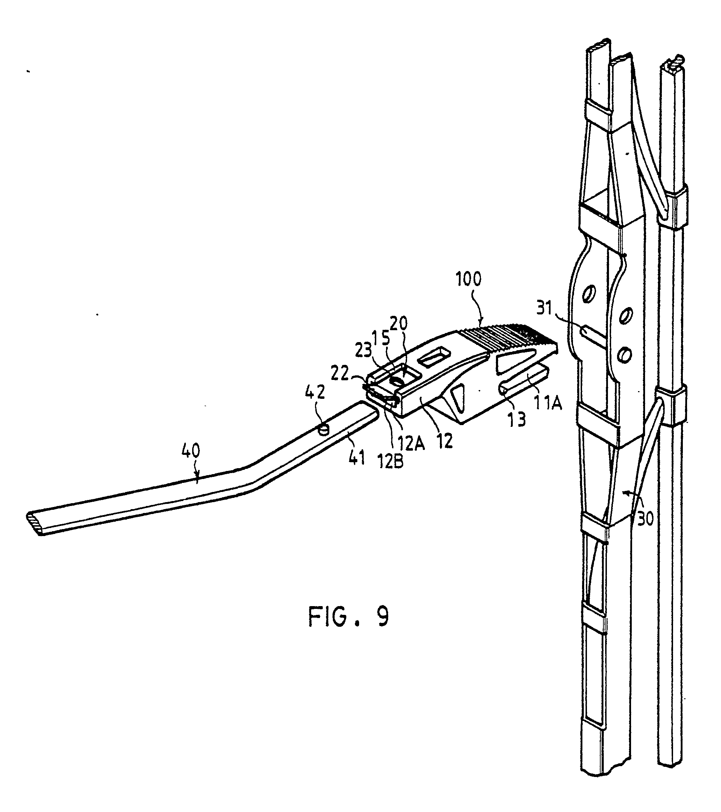

Elongate compartment 12A of sleeve 12 has an end opening 12B for receiving therein one end 41 of a wiper arm 40 (Figure 9). Sleeve 12 is provided with a first opening 15 extending inwards from the end of an upper wall 12C of elongate compartment 12A, and a second opening 14 formed next to first opening 15. Elongate compartment 12A has two side walls 16A, 16A, each one of which side walls 16A, 16A has a longitudinal groove 16 near its upper edge to retain a metallic retaining piece 20.

Metallic retaining piece 20 is made of metallic plate which may be stainless steel or spring brass and consists of a body 20A having a latch 21 formed in body 20A, and a tongue 22 extending from one side of body 20A. Latch 21 is formed by cutting a U-shaped slit 20B in body 20A to form a central peninsula extending towards tongue 22, the central peninsula being slightly bent outwards. Tongue 22 has a width smaller than that of body 20A, and has a retaining hole 23 for receiving stud 42 of wiper arm 40 (Figure 9). Tongue 22 further has a tail 22A slightly bent in the same direction as latch 21 is bent.

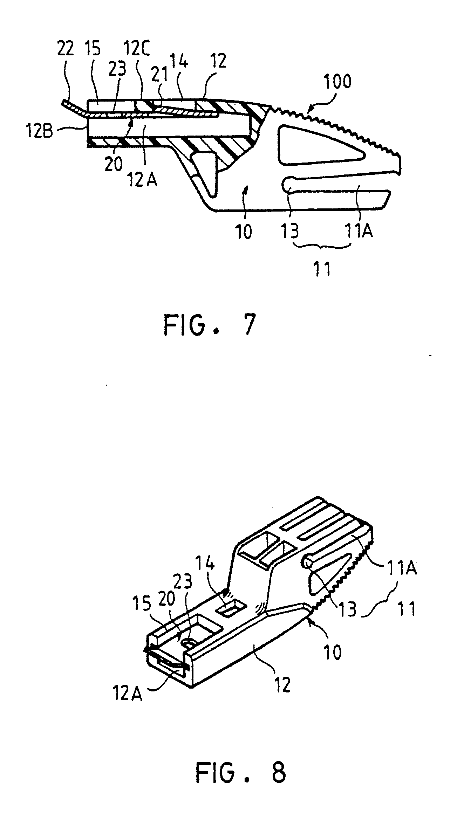

As shown in Figures 6 and 7, metallic retaining piece 20 is inserted into elongate compartment 12A with the two side edges of body 20A of metallic retaining piece 20 slid along grooves 16 of side walls 16A, 16A of elongate. compartment 12A. Latch 21, which is initially pushed in by upper wall 12C to become flush with the plane of body 20A when metallic retaining piece 20 is inserted into elongate compartment 12A, is allowed to spring back when metallic retaining piece 20 is inserted to an innermost position where latch 21 corresponds with (i.e. is aligned with) second opening 14 of sleeve 12, so that the free end of latch 21 engages with an adjacent end edge of second opening 14 to latch metallic retaining piece 20 in position. At this position tongue 22 is disposed to correspond with first opening 15 of sleeve 12 and allowed to deflect freely in first opening 15.

Converging slot 11A of gripping slot 11 provides a narrow passage for retaining pin 31 of wiper blade 30 to squeeze through in order to reach seat 13. When retaining pin 31 is forced to squeeze through the narrow passage, a gripping force is produced to act on retaining pin 31, and as soon as retaining pin 31 is forced into seat 13, retaining pin 31 is firmly located in place.

To use the connector of this invention, one end 41 of wiper arm 40 (Figure 9) having a stud 42 is inserted into elongate compartment 12A through its end opening 12B. Bent tail 22A facilitates the insertion of end 41 of wiper arm 40 into elongate compartment 12A. In the insertion process, stud 42 slides along the lower side of tongue 22 and causes tongue 22 to deflect resiliently outwardly in first opening 15 of sleeve 12, until end 41 of wiper arm 40 is inserted to the innermost position in elongate compartment 12A where stud 42 corresponds with retaining hole 23 of metallic retaining piece 20, allowing tongue 22 to spring back so that stud 42 fits in retaining hole 23. As a result connector 100 is firmly secured onto one end of wiper arm 40.

Then wiper blade 30 is attached to connector 100 by urging retaining pin 31 of wiper blade 30 into gripping slot 11 of connector 100 to the inner end of gripping slot 11 where retaining pin 31 is tightly seated, or gripped in place in seat 13.

To remove wiper blade 30 from connector 100, one may simply prize open gripping slot 11 with a suitable tool to widen gripping slot 11 and enable the removal of retaining pin 31 from seat 13.

To remove connector 100 from wiper arm 40, one may lift tongue 22 outwards in first opening 15 of sleeve 12 to disengage stud 42 from retaining hole 23, and simultaneously pull end 41 of wiper arm 40 to depart from elongate compartment 12A of sleeve 12.

Figure 8 shows a second embodiment of the connector of this invention. In this embodiment, first opening 15 and second opening 14 are formed on a lower wall of elongate compartment 12A, and retaining grooves 16 are formed near the lower edges of side walls 16A, 16A of elongate compartment 12A. Metallic retaining piece 20 is inserted in a manner similar to that of the first embodiment except that metallic retaining piece 20 is turned upside down. Needless to say, stud 42 of wiper arm 40 is formed on an opposite side of wiper arm 40.

Metallic retaining piece 20 will not break, and the process of assembling and disassembling a wiper blade from the connector is much easier than the conventional connector hereinbefore described because of the direction in which the gripping slot of the connector of this invention is formed.

## Claims

1. A connector (100), for connecting a wiper blade (30) with a wiper arm (40), comprising a body (10) moulded of plastics material having a sleeve (12) and a gripping slot (11), said sleeve (12) having an elongate compartment (12A) extending from one side of said body (10) in a longitudinal direction for receiving one end (41) of said wiper arm (40), and said gripping slot (11) being resiliently deformable for receiving a retaining pin (31) of said wiper blade (30); characterised in that said sleeve (12) is provided with a metallic retaining piece (20) which snaps in said elongate compartment (12A) and is operable to secure said connector (100) on said end (41) of said wiper arm (40), and in that said gripping slot (11) is formed in an opposite side of said body (10) to said elongate compartment (12A) and extends in the same longitudinal direction as said elongate compartment (12A).

2. A connector according to claim 1, characterised in that said sleeve (12) has a first opening (15) and a second opening (14);
said metallic retaining piece (20) has a tongue (22) and a latch (21), said tongue (22) being disposed to correspond with said first opening (15) and be capable of resiliently deflecting in said first opening (15), and said latch (21) being disposed to correspond with said second opening (14) and having a free edge for engaging with an adjacent end edge of said second opening (14) to latch said metallic retaining piece (20) in position; and
said tongue (22) has a retaining hole (23) for receiving a stud (42) provided on said end (41) of said wiper arm (40).

3. A connector according to claim 1 or claim 2, characterised in that said gripping slot (11) has a pair of jaws converging to a part-cylindrical seat (13) and only one of said jaws is resiliently deformable.

FIG. 1

FIG. 2

FIG. 5

FIG. 6

FIG. 3

FIG. 4

FIG. 7

FIG. 8

FIG. 9

FIG. 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-2 055 560  (MAGNATEX LTD)<br>* Whole document * | 1,2 | B 60 S  1/40 |
| Y | FR-A-2 501 135  (CHAMPION SPARK PLUG EUROPE SA)<br>* Page 5, lines 22-29; page 6, lines 13-26; figures 10,12-17 * | 1,2 | |
| A | | 3 | |
| Y | FR-A-2 427 931  (SOCIETE POUR L'EQUIPEMENT DE VEHICULES)<br>* Whole document * | 1 | |
| A | | 2,3 | |

TECHNICAL FIELDS SEARCHED (Int. Cl.4)

B 60 S

The present search report has been drawn up for all claims

| Place of search | Date of completion of the search | Examiner |
|---|---|---|
| THE HAGUE | 14-03-1989 | VERLEYE J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)